# EUROPEAN PATENT APPLICATION

(11) **EP 2 361 889 A1**
(43) Date of publication of application: **31.08.2011**
(21) Application number: 11000327.4
(22) Date of filing: 17.01.2011
(51) Int. Cl.: C02F 3/12

(54) **Wastewater treatment system and wastewater treatment process**

(30) Priority: 20.01.2010 JP 2010010241
(71) Applicant: Hitachi Plant Technologies, Ltd., Tokyo 170-8466 (JP)
(72) Inventor: Mori, Naomichi, Toshima-ku Tokyo 170-8466 (JP); Noto, Kazuhiko, Toshima-ku Tokyo 170-8466 (JP); Onishi, Makoto, Toshima-ku Tokyo 170-8466 (JP)
(74) Representative: Strehl Schübel-Hopf & Partner

(57) **Abstract**

The wastewater treatment system (10) according to the present invention includes a plurality of reaction sequences including a first sedimentation tank (12), a reaction tank (14, 30), a final sedimentation tank (16), a first channel (24) which connects the first sedimentation tank and the reaction tank and a second channel (26) which connects the reaction tank and the final sedimentation tank. In one reaction sequence of the plurality of reaction sequences, the reaction tank has a membrane separation tank (36) including a carrier (50), a membrane unit (48), and activated sludge and in which an MLSS concentration of the activated sludge is in a range of 500 mg/L to 7000 mg/L, and wastewater is supplied to the reaction tank via the first channel, and wastewater in a quantity exceeding a treatment capacity of the reaction tank is supplied to the final sedimentation tank via the second channel.

## Description

### Field of the Invention

The present invention relates to a wastewater treatment system and a wastewater treatment process, and more particularly to a wastewater treatment system and a wastewater treatment process which use membrane separation.

### Description of the Related Art

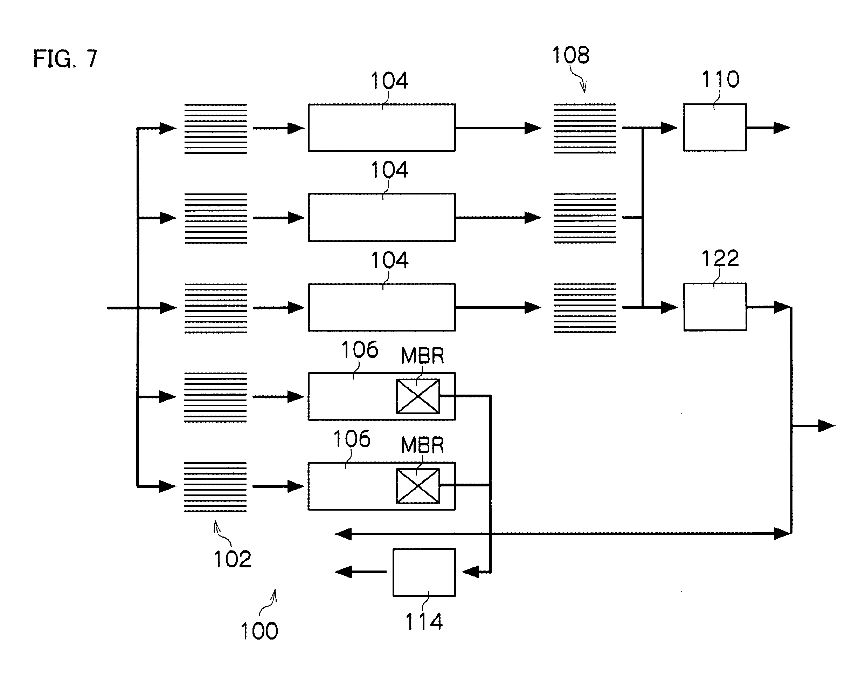

In the past wastewater treatment systems equipped with a first sedimentation tank, a reaction tank (biological treatment tank) and a final sedimentation tank have been known. Recently, membrane bioreactor (MBR) processes have been applied to existing wastewater treatment systems. "Guidelines for Introduction of Membrane Treatment Technology into Sewage Systems, First Edition", Sewage Membrane Treatment Technology Committee, p. 36, 2009 describes an example of the application of MBR to existing sewage plants as shown in Fig. 7. The wastewater treatment system 100 has a plurality of first sedimentation tanks 102 and reaction tanks 104 and 106 connected to the first sedimentation tanks 102. A biological reaction treatment based on a conventional activated-sludge process is carried out in the reaction tanks 104, while a reaction is carried out using an MBR in the reaction tanks 106. In other words, a conventional activated-sludge process sequence and an MBR sequence are operated in series in the system of Fig. 7. The wastewater treated in the reaction tank 104 is supplied to final sedimentation tanks 108. The wastewater is separated into treated water and activated sludge by solid-liquid separation in the final sedimentation tank 108. The treated water from the final sedimentation tank 108 is supplied to a sand filter tank 110 or a sterilization facility 112. The treated water passed through the sand filter tank 110 or the sterilization facility 112 is used as water for plant use or discharged.

On the other hand, the treated water from the reaction tanks 106 is not passed through the final sedimentation tank 108 but sent to an NF (nanofilter)/RO (reverse osmotic pressure) facility 114 to be reused as industrial water depending on the water quality of reuse, or directly used as general service water.

### SUMMARY OF THE INVENTION

The wastewater treatment system described in "Guidelines for Introduction of Membrane Treatment Technology into Sewage Systems" is incapable of responding to flow rates exceeding the filtering capacity of membranes when membrane separation is carried out in the reaction tanks 106. An inflow exceeding the filtering capacity of membranes causes an increase in the water level in the reaction tanks 106, leading to the concern of backflow into an upstream facility or overflow from the reaction tanks 106.

When water flows into the system in a quantity exceeding the filtering capacity, water is distributed to and treated in reaction tanks 104 in addition to the MBR reaction tanks 106. However, it is possible that when the quantity of water reaches the peak due to heavy rain or the like, the system may be overloaded and have difficulty in the treatment. The treatment is also expected to be difficult when membranes in the reaction tank 106 are clogged.

Therefore, countermeasures such as (1) providing a flow rate adjusting tank, (2) changing the water level in a reaction tank to absorb fluctuation and (3) providing a membrane having an area capable of responding to the maximum hourly flow rate are required to deal with the fluctuation in the quantity of water in wet weather or in the maximum daily quantity of water. However, problems of these countermeasures are complicated operation management and high facility cost due to a larger membrane separation apparatus. More specifically, reaction tanks 106 in an MBR process are operated at a high MLSS (Mixed Liquor Suspended Solids) concentration of 10,000 mg/L to 15,000 mg/L. Thus, the application of MBR processes is difficult because of the failure to treat wastewater in the final sedimentation tank 108 when the quantity of water which flows into reaction tanks 106 exceeds the filtering capacity of an MBR.

The present invention has been made in view of the above circumstances to solve the above problems and provides a wastewater treatment system and a wastewater treatment process to which an MBR process is applied.

To achieve the aforementioned object, the wastewater treatment system of the present invention comprises a plurality of reaction sequences including a first sedimentation tank, a reaction tank, a final sedimentation tank, a first channel which connects the first sedimentation tank and the reaction tank and a second channel which connects the reaction tank and the final sedimentation tank, wherein in one reaction sequence of the plurality of reaction sequences, the reaction tank has a membrane separation tank including a carrier, a membrane unit, and activated sludge and in which an MLSS concentration of the activated sludge is in a range of 500 mg/L to 7000 mg/L, and wastewater is supplied to the reaction tank via the first channel, and wastewater in a quantity exceeding a treatment capacity of the reaction tank is supplied to the final sedimentation tank via the second channel. In the present invention, "a carrier" means a carrier of microorganisms, and immobilization pellets such as entrapping immobilization pellets can be used as the carrier, which will be described later.

It is preferred that in the wastewater treatment system of the present invention, the plurality of reaction sequences be composed of the one reaction sequence alone in the above invention.

It is preferred that in the wastewater treatment system of the present invention, the reaction tank in a reaction sequence other than the one reaction sequence have a treatment tank in which an activated sludge treatment is performed in the above invention.

It is preferred that in the wastewater treatment system of the present invention, the reaction tank in the one reaction sequence also has an anoxic tank and an aerobic tank in the above invention.

It is preferred that in the wastewater treatment system of the present invention, 5% by volume to 40% by volume of the carrier be added based on the bulk volume in the above invention.

It is preferred that in the wastewater treatment system of the present invention, the membrane separation tank, the anoxic tank and the aerobic tank have a carrier separation screen in the above invention.

It is preferred that in the wastewater treatment system of the present invention, binding immobilization pellets be added to the anoxic tank and entrapping immobilization pellets be added to the aerobic tank and the membrane separation tank in the invention including the carrier separation screen.

To achieve the aforementioned object, the wastewater treatment process of the present invention comprises using the above wastewater treatment system.

The present invention can offer a wastewater treatment system and a wastewater treatment process to which an MBR is applied and which can respond to fluctuations in the quantity of water.

### BRIEF DESCRIPTION OF THE DRAWINGS

Fig. 1 is a general view of a wastewater treatment system;
Fig. 2 is a graph showing the relationship between MLSS concentrations and flux;
Fig. 3 is a schematic view illustrating a structure of a reaction tank;
Fig. 4 is a schematic view illustrating a structure of another reaction tank;
Fig. 5 is a schematic view illustrating a structure of another reaction tank;
Fig. 6 is a schematic view illustrating a structure of another reaction tank; and
Fig. 7 is a general view of a conventional wastewater treatment system.

### DETAILED DESCRIPTION OF THE PREFERRED EMBODIMENTS

Hereinafter preferred embodiments of the present invention will be described with reference to the accompanying drawings. Although the present invention is described by the following preferred embodiments, the present invention may be modified by various techniques without departing from the scope of the present invention, and embodiments other than the present embodiments may be employed. Accordingly, all modifications within the scope of the present invention are included in the claims. The numerical ranges represented by "to" as used herein include numerical values written before and after "to".

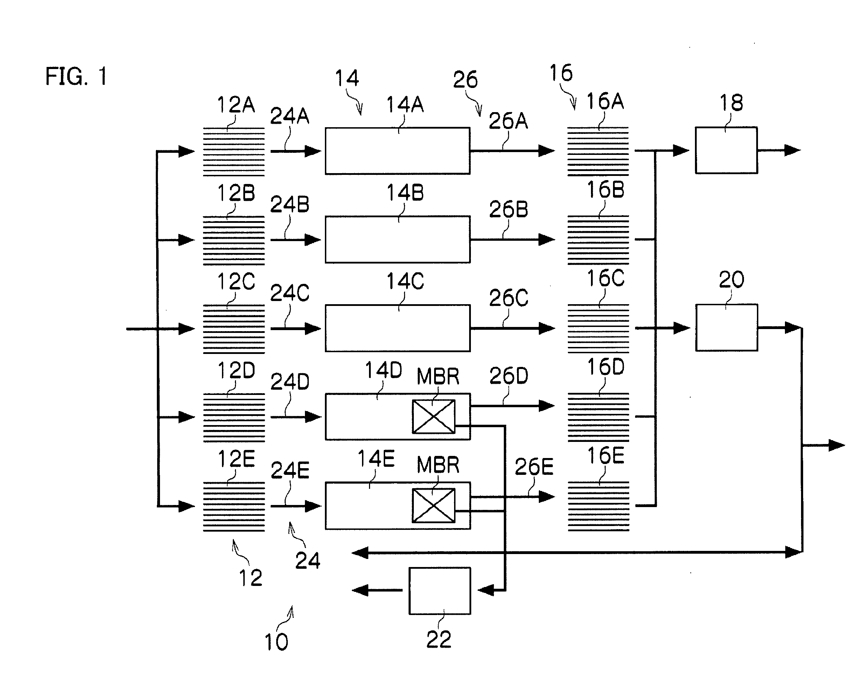

Fig. 1 is a schematic view illustrating the entire structure of a wastewater treatment apparatus according to the present embodiment. The wastewater treatment system 10 includes a plurality of first sedimentation tanks 12 (12A-12E), reaction tanks 14A-14C connected to first sedimentation tanks 12A-12C in which an activated-sludge process is performed, reaction tanks 14D and 14E connected to first sedimentation tanks 12D and 12E and to which a carrier is added and in which a membrane bioreactor process is performed, final sedimentation tanks 16 (16A-16E) connected to the reaction tanks 14 (14A-14E), a sand filter tank 18, a sterilization facility 20 and an NF/RO facility 22.

In the first sedimentation tanks 12 (12A-12E), relatively large solid matters contained in wastewater are separated. The first sedimentation tanks 12 (12A-12E) are connected to the reaction tanks 14 (14A-14E) via channels 24 (24A-24E).

The reaction tank 14A has at least one treatment tank in which a standard activated-sludge process is performed. The reaction tanks 14B and 14C have the same structure as the reaction tank 14A. The reaction tank 14D has one membrane separation tank in which a membrane separation apparatus is provided and a carrier is introduced. The MLSS (mixed liquor suspended solid) concentration in the membrane separation tank is in a range of 500 mg/L to 7000 mg/L.

In the final sedimentation tank 16 (16A-16E), wastewater from the reaction tank 14 (14A-14E) is separated into treated water and activated sludge. An inclined plate separation apparatus or the like may be used as the separation apparatus.

The reaction tanks 14A, 14B and 14C are each connected to final sedimentation tanks 16A, 16B and 16C via channels 26A, 26B and 26C. The reaction tanks 14D and 14E are each connected to final sedimentation tanks 16D and 16E via channels 26D and 26E. The channels 26D and 26E each have a valve V1 and V2. The valves V1 and V2 control whether to supply wastewater to the final sedimentation tanks 16D and 16E from the reaction tanks 14D and 14E.

The wastewater treatment process by the wastewater treatment system 10 when a planned quantity of wastewater is supplied in fair weather is described. A planned quantity of wastewater is supplied to the first sedimentation tank 12 (12A-12E). In the first sedimentation tanks 12 (12A-12E), relatively large solid matters contained in wastewater are separated by sedimentation separation. The wastewater which has been subjected to the solid-liquid separation in the first sedimentation tanks 12 (12A-12E) is transported to the reaction tanks 14 (14A-14E).

The wastewater is treated by a biological reaction based on a standard activated-sludge process in the reaction tanks 14A-14C. The wastewater treated in the reaction tanks 14A-14C is supplied to the final sedimentation tanks 16A-16C. The wastewater is separated into treated water and activated sludge by solid-liquid separation in the final sedimentation tanks 16A-16C. The treated water from the final sedimentation tanks 16A-16C is supplied to a sand filter tank 18 or a sterilization facility 20. The treated water passed through the sand filter tank 18 or the sterilization facility 20 is used as water for plant use or discharged.

In the reaction tanks 14D and 14E, the wastewater is treated by a biological reaction based on an MBR process with addition of entrapping immobilization pellets. Since the addition of entrapping immobilization pellets complements the biological treatment performance, the MLSS concentration in the membrane separation tank is adjusted to 500 mg/L to 7000 mg/L. Although the MLSS concentration is adjusted to 10,000 mg/L to 15,000 mg/L in conventional membrane separation tanks in which a membrane separation apparatus is installed and a biological reaction treatment is carried out, the MLSS concentration is set low in the present embodiment. Even if the MLSS concentration is as low as 500 mg/L to 7000 mg/L, the addition of the entrapping immobilization pellets to the reaction tank makes it possible to achieve treatment capacity equal to that when the MLSS concentration is as high as 10,000 mg/L to 15,000 mg/L.

The wastewater treated in the reaction tanks 14D and 14E is filtered in the MBR and supplied to the NF (nanofilter)/RO (reverse osmotic pressure) facility 22 without being passed through the final sedimentation tanks 16D and 16E, and reused as industrial water or the like. Part thereof is directly reused or discharged into public water areas.

Next, the wastewater treatment process by the wastewater treatment system 10 when wastewater is supplied in a quantity exceeding (for example, twice) the designed/planned quantity of water (maximum daily quantity of water) in wet weather or other cases (maximum hourly quantity of water) is described. Wastewater in a quantity exceeding the planned quantity of water is supplied to the first sedimentation tanks 12 (12A-12E), and the wastewater which has been subjected to the solid-liquid separation in the first sedimentation tanks 12 (12A-12E) is transported to the reaction tanks 14 (14A-14E).

The reaction tanks 14A-14C to which a standard activated-sludge process is applied are generally capable of dealing with a maximum hourly quantity of water treated of about twice the planned quantity of water. Therefore, even if the inflow exceeds the planned quantity of water in wet weather, the tanks can perform the same treatment as in fair weather within the maximum hourly quantity of water. The wastewater treated in the reaction tanks 14A-14C is supplied to the final sedimentation tanks 16A-16C. The treated water from the final sedimentation tanks 16A-16C is supplied to a sand filter tank 18 or a sterilization facility 20. The treated water passed through the sand filter tank 18 or the sterilization facility 20 is used as water for plant use or discharged.

When the MBR is designed with the planned quantity of water (maximum daily quantity of water) and wastewater in a quantity about twice the planned quantity of water flows into the reaction tanks 14D and 14E, the reaction tanks 14D and 14E are incapable of treating the wastewater exceeding the capacity of membranes, and thus the excess wastewater is supplied to final sedimentation tanks 16D and 16E. Since the MLSS concentration in the membrane separation tank in the reaction tanks 14D and 14E is adjusted to 500 mg/L to 7000 mg/L, even if the wastewater is supplied to the final sedimentation tanks 16D and 16E without membrane filtration, the wastewater can be subjected to solid-liquid separation in the final sedimentation tanks 16D and 16E. As a result, treated water can be obtained as in the final sedimentation tanks 16A-16C. The resulting treated water is supplied to a sand filter tank 18 or a sterilization facility 20.

Also, the wastewater is subjected to biological reaction treatment and membrane separation by the MBR in the reaction tanks 14D, 14E and the resulting treated water is supplied to an NF (nanofilter)/RO (reverse osmotic pressure) facility 22 to be reused as industrial water or the like.

According to the present embodiment, since the entrapping immobilization pellets are added to the reaction tanks 14D and 14E, the MLSS concentration can be as low as 500 mg/L to 7000 mg/L, and thus excess wastewater can be treated in the final sedimentation tanks 16D and 16E. Accordingly, the present invention facilitates the application of MBRs to wastewater treatment systems.

Further, the application of entrapping immobilization pellets enables a lower MLSS concentration in the reaction tanks 14D and 14E, and therefore the quantity of air supplied necessary for endogenous respiration can be reduced and the aeration power of an air diffuser can be reduced. In addition, a lower MLSS concentration enables a lower viscosity of treated water in the reaction vessel and thus can improve the aeration efficiency of the air diffuser.

The aeration with entrapping immobilization pellets makes it possible to efficiently clean the membrane surface of a membrane unit immersed in the reaction tanks 14D and 14E, and so clogging of membranes can be prevented. Thus cleaning intervals of the membrane unit can be prolonged and stable operation can be established. Also, since the membrane is cleaned by a carrier, the aeration power of an air diffuser can be reduced. Known membrane units such as flat membrane type, hollow fiber type or tubular type membrane units may be used as the membrane unit.

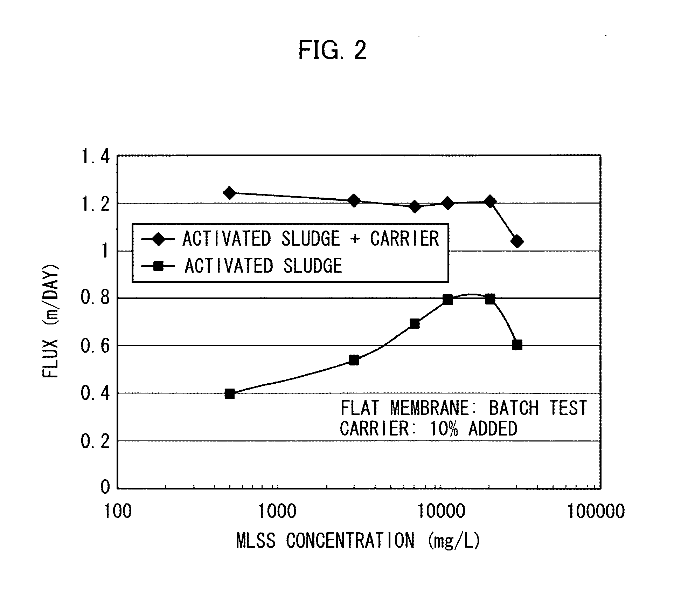

Fig. 2 illustrates the relationship between MLSS concentrations in the treatment vessel and flux (permeation flux) of a membrane unit. For activated sludge, flux (permeation flux) values obtained when a membrane unit (flat membrane) was immersed in a reaction tank and the MLSS concentration was changed were plotted. On the other hand, for activated sludge + carrier, flux (permeation flux) values obtained when a membrane unit (flat membrane) was immersed in a reaction tank, 10% of a carrier was added thereto and the MLSS concentration was changed were plotted.

The graph of activated sludge shows that the flux peaks at 0.8 (m/day) when the MLSS concentration is 10,000 mg/L to 11,000 mg/L. When the MLSS concentration is more than 11,000 mg/L, the flux value decreases. This is because MLSSs or extracellular polymers become dense on the surface of the membrane. On the other hand, when the MLSS concentration is less than 10,000 mg/L, theoretically the flux value increases, but the value has decreased in the graph of activated sludge. This seems that because when the MLSS concentration is less than 10,000 mg/L, the cleaning action on the membrane surface by MLSSs is reduced.

On the other hand, the graph of activated sludge + carrier shows that the flux values can be higher than the flux values for activated sludge by adding a carrier. Furthermore, even at low MLSS concentrations (500 mg/L to 7000 mg/L), flux values can be equal to or slightly increased from those at 10,000 mg/L to 11,000 mg/L. In other words, since the ability of a membrane unit is not reduced even if the MLSS concentration in the reaction tank is lowered, the reaction tank facilitates the application of the MBR process at low MLSS concentrations. The reaction tank which contains activated sludge, a carrier and a membrane unit enables operation at MLSS concentrations at which separation is possible in final sedimentation tanks without reducing the efficiency of membrane units. The reaction tank enables solid-liquid separation of wastewater in a quantity exceeding the planned quantity of water in final sedimentation tanks.

Next, the treatment capacity of the apparatuses constituting a system applying an MBR process, which is shown in Fig. 1, was calculated. When the maximum daily quantity of water treated per sequence is 2000 m³/day, the maximum hourly quantity of water treated per sequence is 4000 m³/day and the number of sequences is 5 (including 2 sequences applying an MBR), the reaction tanks and the final sedimentation tanks have the following treatment capacity.
(1) Maximum hourly quantity of water treated in reaction tanks 14A, 14B and 14C: 4000 m³/day·sequence
(2) Maximum hourly quantity of water treated in final sedimentation tank 16A, 16B and 16C: 4000 m³/day·sequence
(3) Maximum hourly quantity of water treated in reaction tanks 14D and 14E:
   4000 in³/day·sequence; including filtration by the MBR in the reaction tanks 14D and 14E: 2000 m³/day-sequence and separation in the final sedimentation tanks 16D and 16E: 2000 m³/day-sequence.

According to the above calculation, the MBR sequences of the present embodiment are capable of sufficiently responding to cases where the inflow exceeds the planned quantity (4000 m³/day-sequence) in wet weather or other cases.

The number of the MBR sequences of the present embodiment can be determined based on the quantity of industrial water to be reused. By employing an MBR sequence in the reaction tank, the installation area can be smaller than (about two thirds) that of a conventional activated sludge sequence. Since a carrier is added to the reaction tank of the MBR sequence and the carrier complements the biological treatment capacity, the volume of the reaction tank can be reduced. As a result, the installation area can be reduced to about two thirds. More MBR sequences can be installed in the same site area compared to the cases of conventional activated sludge sequences. Therefore, the number of MBR sequences can be determined based on purposes of reducing the installation area or improving treatment capacity.

The wastewater treatment system of the present embodiment is suitable for renewal of existing sewage plants. MBR sequences can be installed in a smaller installation area than existing sequences. Therefore the MBR sequences have treatment capacity not only equal to but also larger than that of existing sequences. Water filtered by the MBR sequences can be reused in various applications. It is preferable to determine the number of sequences applying an MBR depending on the demand for water reused.

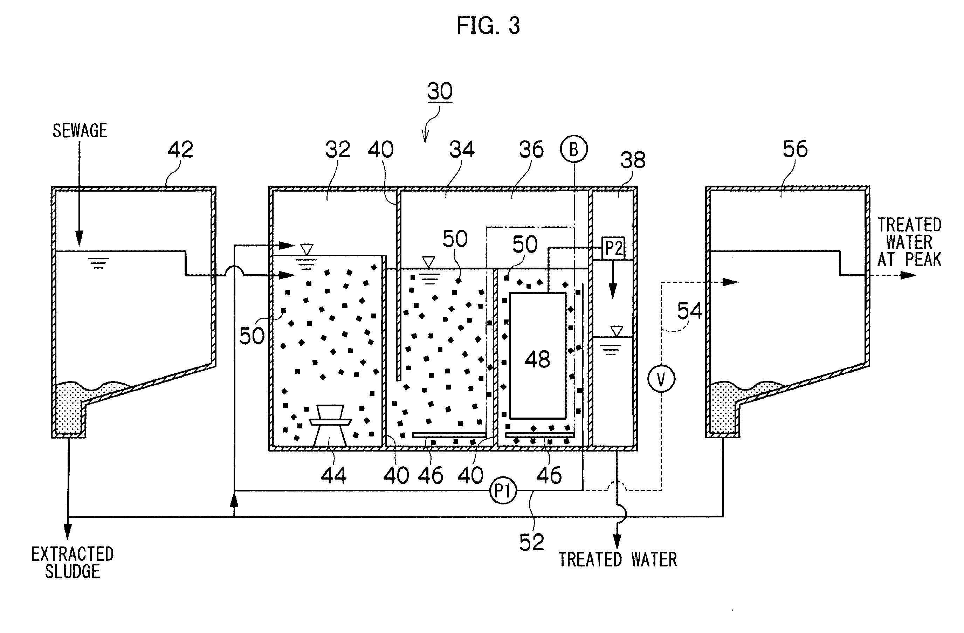

Fig. 3 illustrates an example of a reaction tank to which entrapping immobilization pellets are added and an MBR process is applied. The reaction tank 30 has an anoxic tank 32, an aerobic tank 34, a membrane separation tank 36 and a treated water tank 38. A partition wall 40 separates the respective tanks. However, wastewater supplied from the first sedimentation tank 42 can move from the anoxic tank 32, the aerobic tank 34 to the membrane separation tank 36. The anoxic tank 32 is kept anaerobic. A submerged stirrer 44 is provided in the anoxic tank 32. The aerobic tank 34 is kept aerobic by an air diffuser 46 provided in the aerobic tank 34. The air diffuser 46 is connected to a blower B. An air diffuser 46 and a membrane unit 48 are provided in the membrane separation tank 36. 5% by volume to 40% by volume, preferably 5% by volume to 15% by volume, of entrapping immobilization pellets 50 are added to the respective tanks. The reaction tank 30 has a circulation channel 52 and a pump P1, and the entrapping immobilization pellets 50 and wastewater are returned to the anoxic tank 32 from the membrane separation tank 36. The entrapping immobilization pellets 50 keeps the MLSS concentration in the anoxic tank 32, aerobic tank 34 and the membrane separation tank 36 at 500 mg/L to 7000 mg/L. Although Fig. 3 illustrates an example in which entrapping immobilization pellets are added to all tanks, the entrapping immobilization pellets may be added to at least the membrane separation tank 36. The treated water separated in the membrane unit 48 is transferred to the treated water tank 38 by a pump P2. The treated water is discharged from the treated water tank 38. In the operation in fair weather, a valve V provided in a channel 54 is closed. Therefore, the wastewater supplied from the first sedimentation tank 42 is basically subjected to solid-liquid separation in the membrane unit 48.

On the other hand, when the quantity of wastewater supplied to the first sedimentation tank 42 is increased in wet weather or other cases, the valve V is opened. Part of the wastewater supplied to the reaction tank 30 is transferred to the final sedimentation tank 56 from the membrane separation tank 36 through the channel 54. Excess sludge is discharged from the first sedimentation tank 42 and the final sedimentation tank 56.

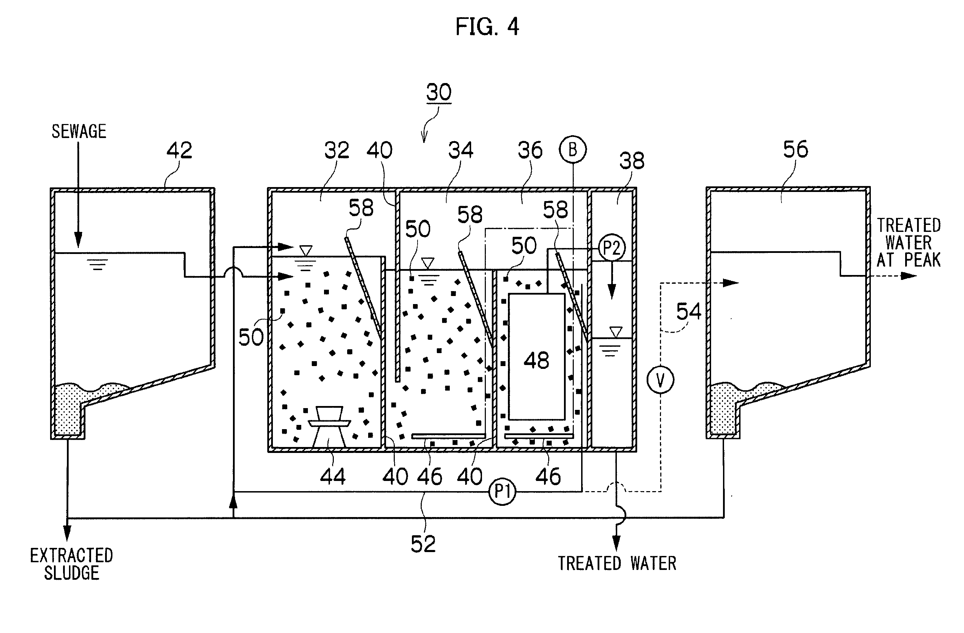

Fig. 4 illustrates another example of a reaction tank to which entrapping immobilization pellets are added and an MBR process is applied. The structures which are the same as those in Fig. 3 are shown by the same reference numerals and their explanation may be omitted. The reaction tank 30 shown in Fig. 4 has an anoxic tank 32, an aerobic tank 34 and a carrier separation screen 58 in a membrane separation tank 36. The carrier separation screen 58 can prevent the entrapping immobilization pellets 50 added to the anoxic tank 32, the aerobic tank 34 and the membrane separation tank 36 from being mixed. This makes it possible to add entrapping immobilization pellets 50 suitable for the biological reaction treatment in each of the anoxic tank 32, the aerobic tank 34 and the membrane separation tank 36. As a result, the biological reaction treatment in the respective tanks can be performed efficiently.

In the reaction tanks shown in Fig. 3 and Fig. 4, wastewater in a quantity exceeding the planned quantity is supplied to the final sedimentation tank 56 from the membrane separation tank 36 through the channel 54, but the structure is not limited thereto. For example, wastewater which overflows from the membrane separation tank can be transferred to the final sedimentation tank.

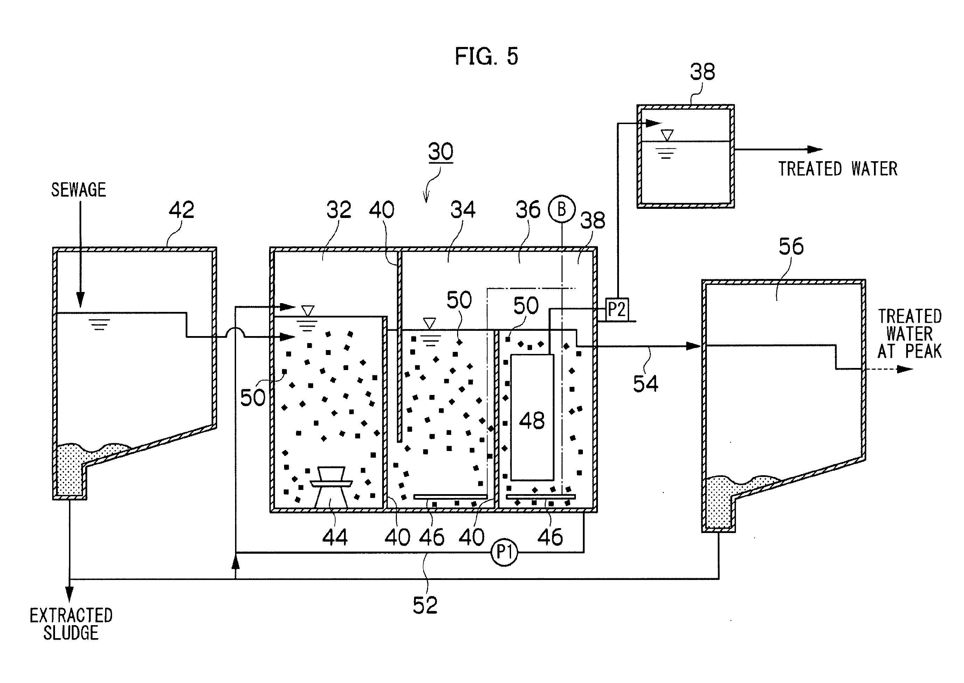

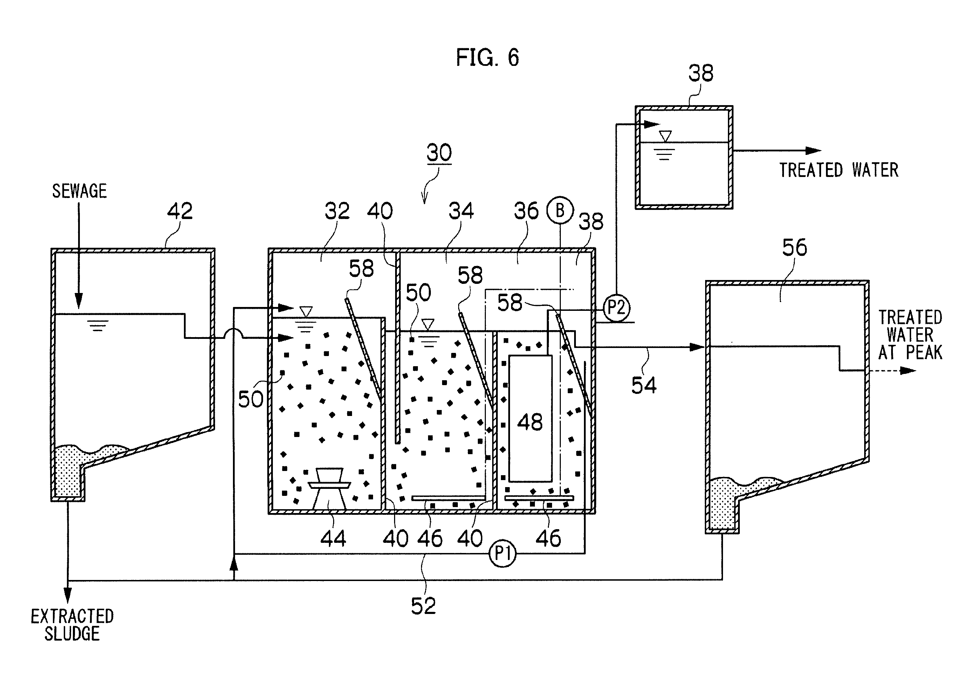

Fig. 5 and Fig. 6 illustrate a reaction tank with a structure in which excess wastewater is allowed to overflow into the final sedimentation tank. The reaction tank shown in Fig. 5 does not have a carrier separation screen as the reaction tank shown in Fig. 3. The structures which are the same as those in Fig. 3 are shown by the same reference numerals and their explanation may be omitted.

Unlike the reaction tank shown in Fig. 3, the treated water tank 38 is provided separately from the membrane separation tank 36. The treated water separated in the membrane unit 48 in the membrane separation tank 36 is transferred to the treated water tank 38 by a pump P2. The treated water is discharged from the treated water tank 38.

On the other hand, when the quantity of wastewater supplied to the first sedimentation tank 42 is increased in wet weather or other cases, part of the wastewater supplied to the reaction tank 30 overflows from the membrane separation tank 36 and is transferred to the final sedimentation tank 56 through the channel 54. The rest of the wastewater is subjected to solid-liquid separation in the membrane unit 48 and transferred to the treated water tank 38.

The reaction tank shown in Fig. 6 has a carrier separation screen as the reaction tank shown in Fig. 4. The structures which are the same as those in Fig. 4 and Fig. 5 are shown by the same reference numerals and their explanation may be omitted. The reaction tank 30 shown in Fig. 6 has an anoxic tank 32, an aerobic tank 34 and a carrier separation screen 58 in a membrane separation tank 36.

When the quantity of wastewater supplied to the first sedimentation tank 42 is increased in wet weather or other cases, part of the wastewater supplied to the reaction tank 30 overflows from the membrane separation tank 36 and is transferred to the final sedimentation tank 56 through the channel 54. The rest of the wastewater is subjected to solid-liquid separation in the membrane unit 48 and transferred to the treated water tank 38.

Preferred examples of microorganisms entrapped and immobilized in the entrapping immobilization pellets of the present embodiment include, depending on the types of reaction tanks, nitrifying bacteria, complex microorganisms composed of nitrifying bacteria, denitrifying bacteria and anaerobic ammonia oxidizing bacteria, which are for removing nitrogen, and microorganisms capable of decomposing specific toxic chemical substances such as dioxin (e.g., water-bloom degrading microbes, PCB degrading microbes, dioxin degrading microbes and environmental hormone degrading microbes). The microorganisms include not only microorganisms concentrated and separated by culturing or the like, but also substances containing various microorganisms, such as activated sludge in sewage plants, sludge in lakes, rivers and sea, and soil.

Examples of immobilizing materials include, but not limited to, monomers, prepolymers and oligomers. For example, polyacrylamide, polyvinyl alcohol, polyethylene glycol, sodium alginate, carageenan and agar may be used. Examples of immobilizing material prepolymers include the following compounds.

### (Monomethacrylates)

Polyethylene glycol monomethacrylate, polyprene glycol monomethacrylate, polypropylene glycol monomethacrylate, methoxydiethylene glycol methacrylate, methoxypolyethylene glycol methacrylate, methacryloyloxyethyl hydrogen phthalate, methacryloyloxyethyl hydrogen succinate, 3-chloro-2-hydroxypropyl methacrylate, stearyl methacrylate, 2-hydroxy methacrylate, ethyl methacrylate and the like.

### (Monoacrylates)

2-hydroxyethyl acrylate, 2-hydroxypropyl acrylate, isobutyl acrylate, t-butyl acrylate, isooctyl acrylate, lauryl acrylate, stearyl acrylate, isobornyl acrylate, cyclohexyl acrylate, methoxytriethylene glycol acrylate, 2-ethoxyethyl acrylate, tetrahydrofurfuryl acrylate, phenoxyethyl acrylate, nonylphenoxypolyethylene glycol acrylate, nonylphenoxypolypropylene glycol acrylate, silicon-modified acrylate, polypropylene glycol monoacrylate, phenoxyethyl acrylate, phenoxydiethylene glycol acrylate, phenoxypolyethylene glycol acrylate, methoxypolyethylene glycol acrylate, acryloyloxyethyl hydrogen succinate, lauryl acrylate and the like.

### (Dimethacrylates)

1,3-butylene glycol dimethacrylate, 1,4-butanediol dimethacrylate, ethylene glycol dimethacrylate, diethylene glycol dimethacrylate, triethylene glycol dimethacrylate, polyethylene glycol dimethacrylate, butylene glycol dimethacrylate, hexanediol dimethacrylate, neopentyl glycol dimethacrylate, polyprene glycol dimethacrylate, 2-hydroxy-1,3-dimethacryloxypropane, 2,2-bis-4-methacryloxyethoxyphenylpropane, 3,2-bis-4-methacryloxydiethoxyphenylpropane, 2,2-bis-4-methacryloxypolyethoxyphenylpropane and the like.

### (Diacrylates)

Ethoxylated neopentyl glycol diacrylate, polyethylene glycol diacrylate, 1,6-hexanediol diacrylate, neopentyl glycol diacrylate, tripropylene glycol diacrylate, polypropylene glycol diacrylate, 2,2-bis-4-acryloxyethoxyphenylpropane, 2-hydroxy-1-acryloxy-3-methacryloxypropane and the like.

### (Trimethacrylates)

Trimethylolpropane trimethacrylate and the like.

### (Triacrylates)

Trimethylolpropane triacrylate, pentaerythritol triacrylate, trimethylolpropane-EO adduct triacrylate, glycerol-PO adduct triacrylate, ethoxylated trimethylolpropane triacrylate and the like.

### (Tetraacrylates)

Pentaerythritol tetraacrylate, ethoxylated pentaerythritol tetraacrylate, propoxylated pentaerythritol tetraacrylate, ditrimethylolpropane tetraacrylate and the like.

### (Urethane acrylates)

Urethane acrylate, urethane dimethyl acrylate, urethane trimethyl acrylate and the like.

### (Other prepolymers)

Acrylamide, acrylic acid, dimethylacrylamide and the like.

The above-described immobilizing materials may be used alone or in a combination of two or more.

Radical polymerization using potassium persulfate is most suitable for the polymerization of the entrapping immobilization pellets, but polymerization using ultraviolet rays or electron beams or redox polymerization may also be employed. It is preferred that in the polymerization using potassium persulfate, the addition quantity of potassium persulfate is 0.001 to 0.25% by mass and the addition quantity of an amine polymerization accelerator is 0.01 to 0.5% by mass. β-dimethylaminopropionitrile, N,N,N',N'-tetramethylethylenediamine or the like may be preferably used as the amine polymerization accelerator.

Entrapping immobilization pellets having a particle size of 0.3 mm to 1.5 mm can be produced, for example, by the following method. First, a carrier block larger than the pellets to be used is prepared. Then the carrier block is set on a cutting apparatus equipped with a cutting blade in the form of a lattice. The carrier block is transferred at a predetermined transfer speed and passed through the blade to be cut in the form of a lattice. Finally the carrier block which has been cut in the form of a lattice is cut by a rotating blade to produce entrapping immobilization pellets having a particle size of 0.3 mm to 1.5 mm.

Various materials such as plastic, ceramics, activated carbon and silica sand may be used as binding immobilization pellets. Alternatively, water absorbing polymer gel such as polyvinyl alcohol or water absorbing gel may be used. Plastic in the form of a sponge, a column which has been made hollow or a string may be used.

## Claims

1. A wastewater treatment system (10) comprising a plurality of reaction sequences including a first sedimentation tank (12), a reaction tank (14, 30), a final sedimentation tank (16), a first channel (24) which connects the first sedimentation tank and the reaction tank and a second channel (26) which connects the reaction tank and the final sedimentation tank,
**characterized in that** in one reaction sequence (12D, 14D, 16D, 24D, 26D, 12E, 14E, 16E, 24E, 26E) of the plurality of reaction sequences, the reaction tank (14, 30) has a membrane separation tank (36) including a carrier (50), a membrane unit (48), and activated sludge and in which an MLSS concentration of the activated sludge is in a range of 500 mg/L to 7000 mg/L, and
wastewater is supplied to the reaction tank via the first channel, and wastewater in a quantity exceeding a treatment capacity of the reaction tank is supplied to the final sedimentation tank via the second channel.

2. The wastewater treatment system (10) according to claim 1, wherein the plurality of reaction sequences are composed of the one reaction sequence (12D, 14D, 16D, 24D, 26D, 12E, 14E, 16E, 24E, 26E) alone.

3. The wastewater treatment system (10) according to claim 1, wherein the reaction tank (14) in a reaction sequence (12A to 12C, 14A to 14C, 16A to 16C, 24A to 24C, 26A to 26C) other than the one reaction sequence (12D, 14D, 16D, 24D, 26D, 12E, 14E, 16E, 24E, 26E) has a treatment tank in which an activated sludge treatment is performed.

4. The wastewater treatment system (10) according to any one of claims 1 to 3, wherein the reaction tank (14D, 14E) in the one reaction sequence (12D, 14D, 16D, 24D, 26D, 12E, 14E, 16E, 24E, 26E) further comprises an anoxic tank (32) and an aerobic tank (34) .

5. The wastewater treatment system (10) according to any one of claims 1 to 4, wherein 5% by volume to 40% by volume of the carrier (50) is added based on the bulk volume.

6. The wastewater treatment system (10) according to claim 4, wherein the membrane separation tank (36), the anoxic tank (32) and the aerobic tank (34) comprise a carrier separation screen (58).

7. The wastewater treatment system (10) according to claim 6, wherein binding immobilization pellets are added to the anoxic tank (32) and entrapping immobilization pellets (50) are added to the membrane separation tank (36) and the aerobic tank (34).

8. A wastewater treatment process comprising using the wastewater treatment system (10) according to any one of claims 1 to 7.
